# EUROPEAN PATENT SPECIFICATION

(11) **EP 0 762 618 B1**
(45) Date of publication and mention of the grant of the patent: **14.07.1999**
(21) Application number: 96305891.2
(22) Date of filing: 12.08.1996
(51) Int. Cl.: H02K 21/12, H02K 37/12

(54) **Transverse flux electrical machine**
Elektrische Maschine mit transversalem magnetischem Flu
Machine électrique à flux magnétique transversal

(30) Priority: 11.08.1995 GB 9516497
(43) Date of publication of application: 12.03.1997
(73) Proprietor: ROLLS-ROYCE POWER ENGINEERING plc, Newcastle-upon-Tyne NE3 3SB (GB)
(72) Inventor: Mitcham, Alan John, Ponteland, Northumberland NE20 9LJ (GB)
(74) Representative: Barcock, Ruth Anita

(56) References cited:
- WO-A-95/04399
- DE-C- 4 138 014

## Description

The present invention relates to an electrical machine and in particular to a synchronous machine which operates in accordance to transverse flux principles.

A synchronous machine operating in accordance with transverse flux principles consists of an armature winding in the form of a circular coil co-axial with a rotor. The armature winding links the flux generated by permanent magnets mounted on the rim of the rotor by means of a series of stator cores. An advantage of this topology is that the section of the stator cores can be increased so that more flux can be carried without encroaching on the space required by the armature winding.

In previous designs of transverse flux machines the rotor rims carry two side by side rows of permanent magnets separated by an insulating spacer. Two circular stator coils are used and stator cores are incorporated on both the inside and the outside of the rotor so that useful torque is provided at both the inner and outer surfaces of the rotor.

Problems with machines of this design are that it is difficult to assemble as the stator coils are enclosed within the stator cores. The rotor rims are long and lack stiffness and the rotor is subject to deflections as it has little stiffness against radial shock. The radial force on the stator cores as the flux alternates causes radial movement of the stator casing. This zero order stator case vibration is difficult to alleviate without adding thickness to the casing.

The topology of transverse flux motors has recently been improved to address these problems. The improved topology has a rim consisting of a single row of permanent magnets straddled by a series of stator cores. The ends of the stator core are radially displaced to straddle the rotor rim.

Examples of transverse flux machines are known, for example, from DE-C-41 38 014 and WO-A-95 04399, which address the problem of providing machines that are economical to manufacture while offering high mechanical strength and favourable magnetic circuit characteristics.

A problem with these improved transverse flux motors is that the stator cores belonging to adjacent motor phases are also subject to significant electromagnetic coupling, which degrades the machine performance.

The present invention seeks to provide a transverse flux motor in which the amount of electromagnetic coupling around the circumference of the motor is reduced.

According to the present invention a transverse flux electrical machine comprises a rotor including a rotor shaft for rotation about an axis and at least one disc extending therefrom for rotation therewith, each rotor disc has at least one pair of circumferential rotor rims secured thereto, the rims in each pair are secured at the same radial location on opposite sides of the rotor disc, each rotor rim consists of a single row of alternate magnets and pole pieces and is opposed by a series of stator cores disposed adjacent and facing the rotor rim, armature windings are disposed within the stator cores for operably exciting said stator, whereby in operation the armature windings for each pair of rotor rims are excited by currents which are in antiphase and the rotor magnets or the rotor magnets and the stator cores in each pair are arranged so that the long path fluxes cancel.

In one embodiment of the present invention the long path fluxes are cancelled by arranging each pair of rims so that the magnets in each rim have reverse polarity to one another and the stator cores are oppositely handed.

In a second embodiment of the present invention the long path fluxes are cancelled by arranging that the magnets in each rim are slanted in opposite directions.

The electrical machine may have multiple discs the phase orientation for a pair of rims on one disc being displaced relative to the phase orientation for pairs of rims on the other discs to reduce torque ripple.

In one embodiment of the present invention the electrical machine has three discs, the phase orientation for a the pair of rims on one of the discs being displaced by 120° relative to the phase orientation for the pairs of rims on the other discs to reduce torque ripple.

Multiple pairs of rims may also be provided on each disc at different radial locations on the disc. Preferably the phase orientation for pairs of rims on one disc are phase displaced relative to the phase orientation for the other pairs of rims on the same disc to reduce torque ripple.

In a further embodiment of the present invention two pairs of rims are provided on each rotor disc at different radial locations, the phase orientation of the radially outer pair of rims being displaced by 90° relative to the phase orientation of the radially inner pair of rims to reduce torque ripple.

The present invention will now be described with reference to the accompanying drawings in which;

Figure 1 is a cross-sectional view of a transverse flux motor in accordance with the present invention.

Figure 2 is an enlarged view of part of one of the rotor rims shown in figure 1.

Figure 3 shows the arrangement of a single motor phase.

Figures 4 and 5 show alternative designs of stator cores for use in a transverse flux motor in accordance with the present invention.

Figure 6 shows the short path flux through a stator core in accordance with the present invention.

Figure 7 shows the long path flux through a stator core in accordance with the present invention.

Figure 8 shows an arrangement in which the magnets are slanted to cancel the long path flux.

Figure 9 shows an arrangement in which the stator cores are oppositely handed to cancel the long path flux.

Figure 10 shows an part of a rotor disc having four phases arranged thereon thereon.

Figure 11 shows the electrical phase relationship for the arrangement shown in figure 10.

Figure 12 is a graph of torque verses time for the four phases shown in figure 10.

Figure 13 shows part of a transverse flux motor in which three discs are provided, each disc having a pair of phases arranged thereon.

Figure 14 shows the electrical phase relationship for the arrangement shown in figure 13.

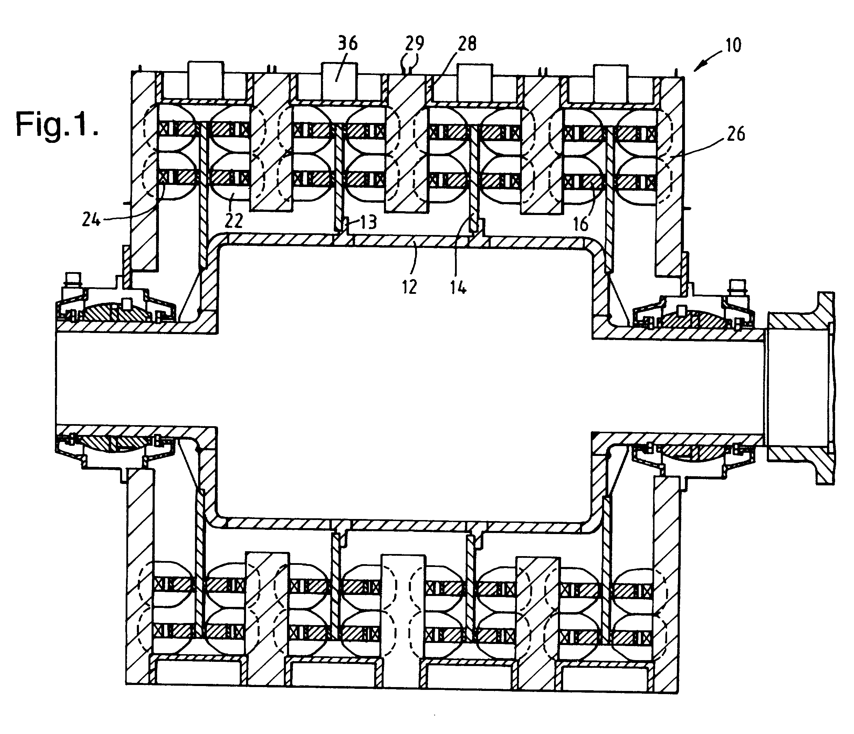

Referring to figure 1 a transverse flux motor, generally indicated at 10 comprises a rotor and a stator assembly.

The rotor assembly has four rotor discs 14 bolted to flanges 13 on a hollow shaft 12. Each disc 14 has four circumferential rotor rims 16 which support the active rotor components for four motor phases. The rims 16 consist of single rows of alternate laminated pole pieces 18 and permanent magnets 20.

Suitable magnet materials are the high energy rare earth magnet materials such as samarium cobalt and neodymium iron boron.

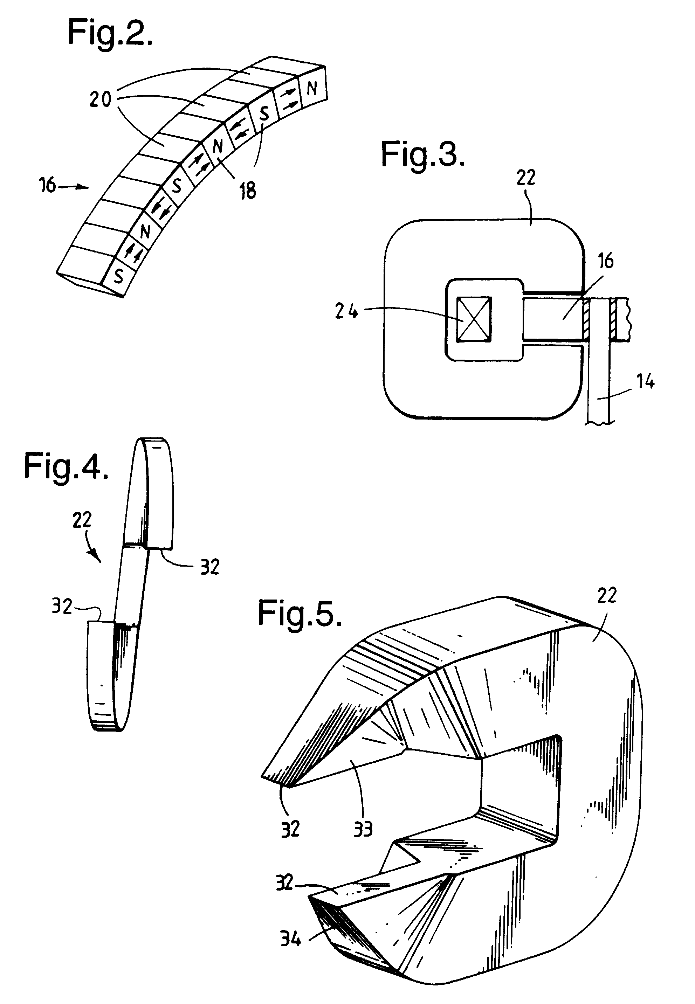

The magnets 20 are orientated in the circumferential direction as shown in figure 2 so that the flux from two of the magnets 20 is concentrated into a single pole piece 18. The pole pieces 18 consist of laminations held in compression by bolts (not shown).

Opposing each rotor rim 16 are a series of stator cores 22. A coil 24 is disposed between the stator cores 22 around the rim 16 of the rotor. The coil 24 and stator cores 22 are supported in a stator frame. The stator frame consists of stator discs 26 which are flanged and bolted to a housing 28. The stator cores 22 are located in slots in the stator discs 26. The stator discs 26 are made from aluminium and have a high thermal conductivity to remove heat. A coolant such as water is provided for cooling purposes through the cooling connections 29.

The stator cores 22 are C shaped, figure 3, and are arranged so that they can receive flux from two adjacent magnets 20 to give the required flux concentration. The stator cores 22 or the magnets 20 on the rotor rim 16 are skewed in such away that each stator core 22 closes around two opposite (north and south) laminated pole pieces 18.

Figures 4 and 5 show different stator core 22 designs which have a geometry as described. In the preferred embodiment of the present invention the stator cores are asymmetric, as shown in figure 5.

In operation an alternating current passes from terminal boxes 36 mounted on the stator frame 28 through the coils 24 to produce a rotating magnetic field. The rotor rotates as the magnets 20 follow the rotating magnetic field. The torque generated by each coil 24 is typically sinusoidal and falls to zero as the poles 20 and 32 attract. To give a smooth steady torque multiple phases are required. The multiple phases are provided generally by way of multiple discs and/or multiple phases per disc. The phases are arranged to give complementary torque so that the sinusoidal torque ripple cancels out.

Cancellation of torque ripple means that ideally the phases must be paired so they are complementary to one another. This implies a displacement in the orientation of the phases, ie. the electrical currents and the pole or stator cores are displaced between pairs of rims. To cancel torque ripple the phases should have a separation of 90 degrees. However for a phase separation of 90 electrical degrees there is considerable electromagnetic coupling between the phases and the performance of the motor degrades. One consequence of the electromagnetic coupling is that eddy currents are generated and pass through the rotor discs 12 and results in high electromagnetic losses.

The electromagnetic coupling and the associated eddy currents can be eliminated if phases on opposite sides of the disc 14 are displaced by 180 electrical degrees (antiphase).

It is also necessary to cancel the long path fluxes by arranging that the long path fluxes in adjacent rotor rims 16 are equal and opposite. Failure to cancel the long path fluxes causes circulatory currents which pass through the rotor shaft 12 and the stator frame.

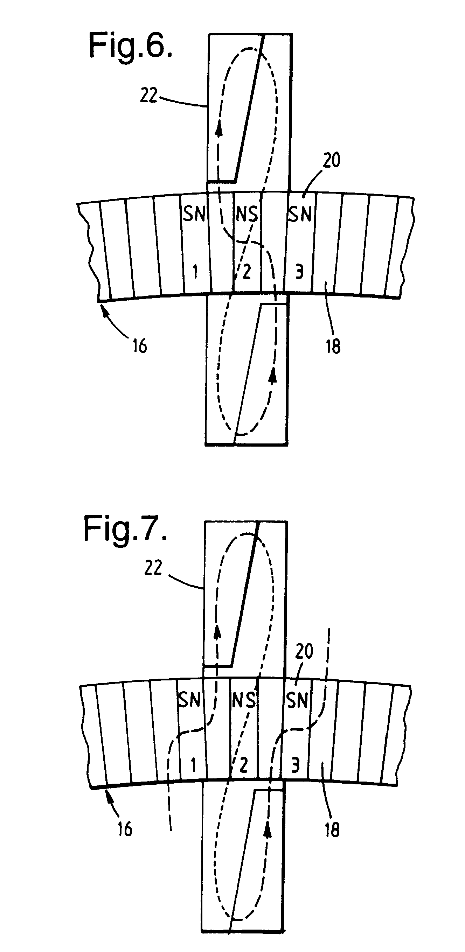

The flux that feeds the upper limb of the stator core 22 consists of the short flux path which is produced by magnet number 2 in figure 6 and also the long flux path which is produced by magnet number 1. The funnelling of the flux relies on both magnets 1 and 2 being able to feed the upper limb of the stator core 22. However whilst the short path flux consists of a local flux loop which simply links the armature winding 24 via a single stator core 22 the long flux path links all the odd numbered magnets including magnets 1 and 3 as shown in figure 7. The long path flux thus links all the stator cores 22 and all the odd numbered magnets to form a complete flux loop around the circumference of the rotor. In normal operation the long path flux will alternate around the machine (clockwise and anticlockwise).

Losses due to the circulatory currents are reduced if the long path fluxes on opposite sides of the disc 14 cancel.

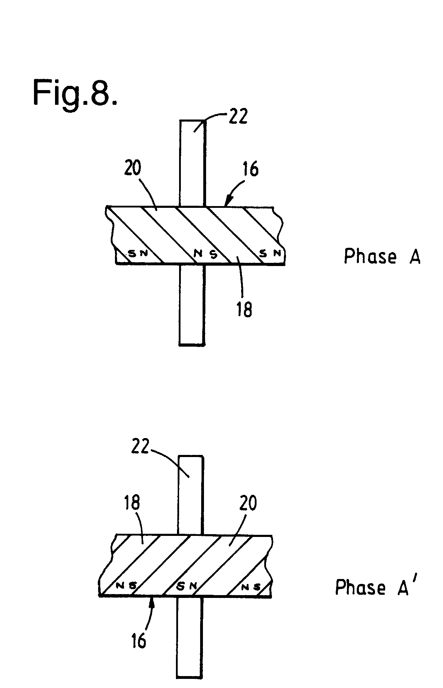

Figure 8 shows an arrangement in which the long path fluxes are cancelled by arranging each pair of rims 16 so that the magnets 20 in each rim 16 are slanted in opposite directions.

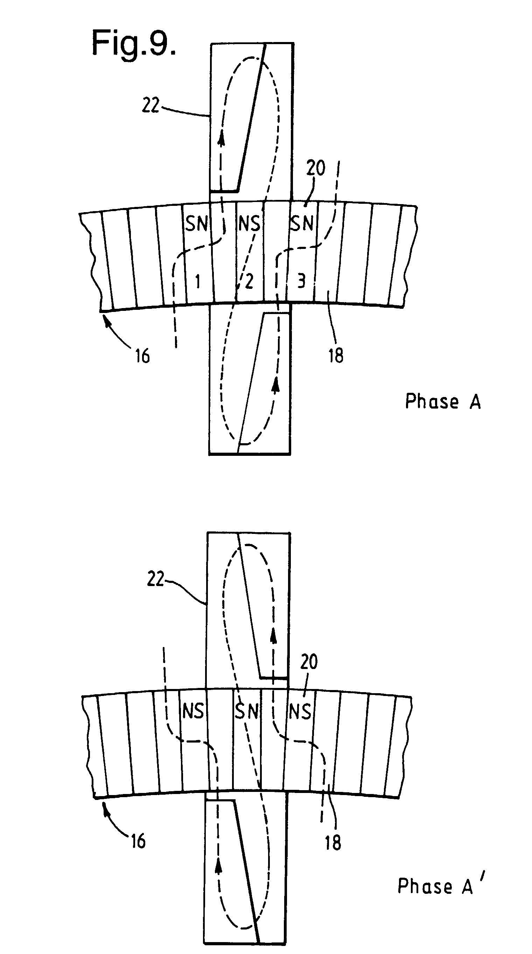

Figure 9 shows an alternative arrangement in which the long path fluxes are cancelled by arranging each pair of rims 16 so that the magnets 20 in each rim 16 have reverse polarity to one another and the stator cores 22 opposing each rim 16 are oppositely handed.

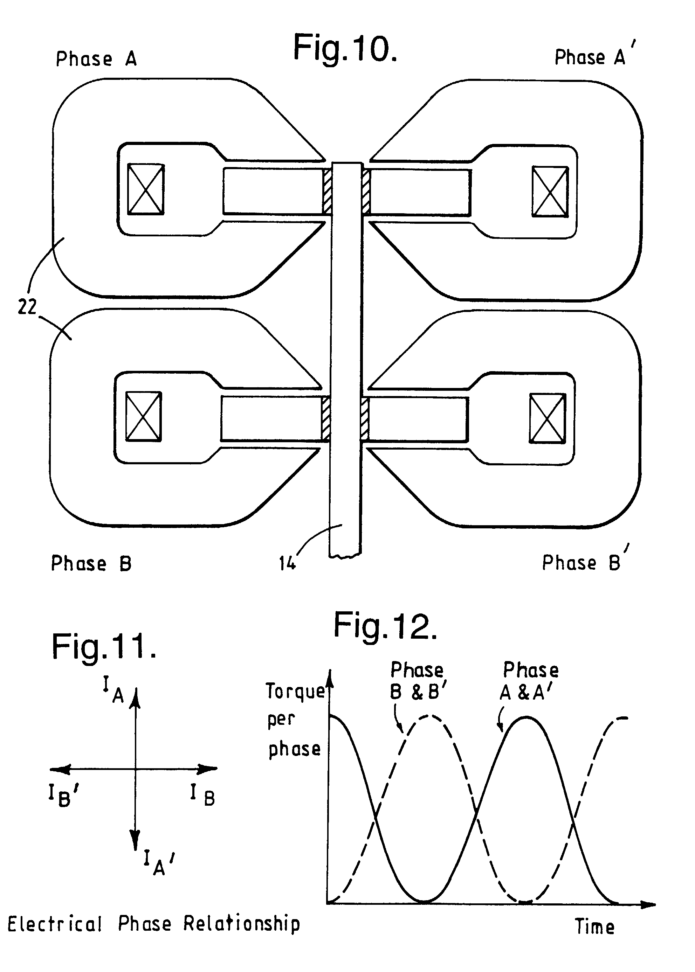

Figure 10 shows an arrangement in which each rotor disc 14 is provided with four phases. The phases in each pair of rims 16 are in antiphase ie. have an electrical phase separation of 180°, to reduce the electromagnetic coupling. The rotor magnets 20 in each pair of rims 16 have reverse polarity to one another and the stator cores 22 are oppositely handed so that the long path flux cancel. The electrical phase relationship for this arrangement is shown in figure 11 and the radially inner pair of rims 16 are phase displaced by 90° , with respect to the radially outer pair of rims 16 to reduce the torque ripple, figure 12.

The arrangement shown in figure 10 achieves a large degree of torque ripple cancellation. The torque ripple is not completely eliminated over the full speed and power range of the motor since the inner and outer rims 16 provide different full load torque. (The torque produced by each rim 16 is in proportion to the square of the diameter). The incomplete cancellation of the torque ripple however has insignificant practical implications in a multi-disc arrangement since torque ripple cancellation is also provided by the phase orientation of the different discs 14.

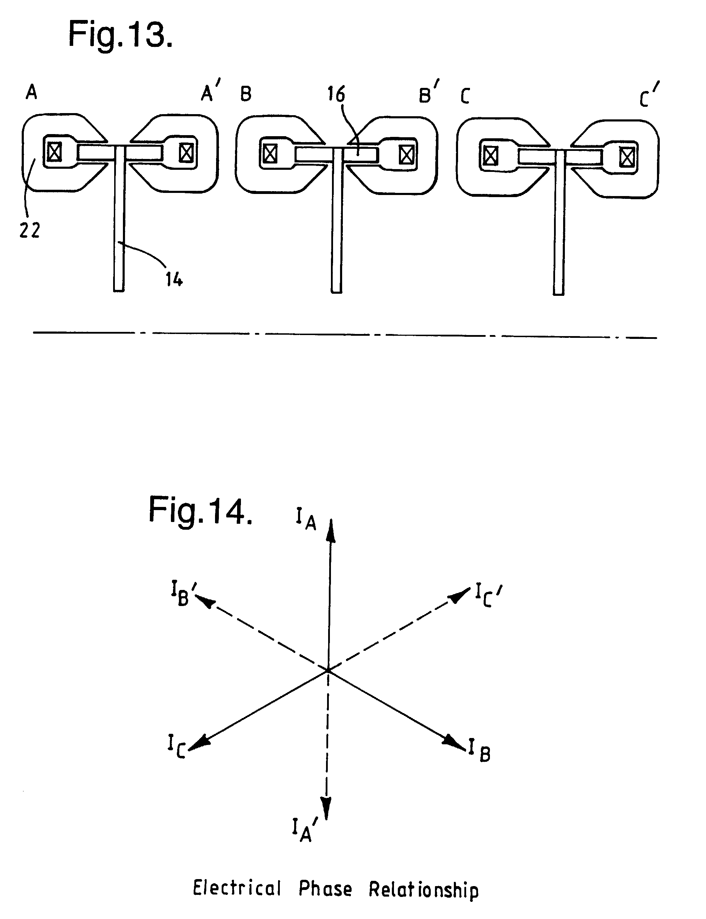

In a further embodiment of the present invention, shown in figure 13, the shaft 12 carries three discs 14 each having a single pair of rims 16 at a particular radial location.

The phases on opposite sides of the disc 14 are in antiphase to reduce the electromagnetic coupling and for each pair the the stator cores 22 are oppositely handed so that the long path fluxes cancel. Torque ripple is reduced by arranging that the pair of phases on each disc 14 are phase displaced by 120° relative to the phases on the other discs 14. Figure 14 shows the electrical phase relationship for this arrangement.

It will be appreciated by one skilled in the art that the torque ripple effect can be reduced by having multiple pairs of rims 16 on one disc 14, each pair being phase displaced by an appropriate amount or by phase displacing pairs of rims 16 on adjacent discs 14 by an appropriate amount.

A motor constructed in accordance with the present invention could have any number of discs 14 and/or multiple pairs of rims 16 per disc 14. By using multiple pairs of rims 16 and stator assemblies 22 on either side of each disc 14 the torque available for a given disc diameter is increased.

## Claims

1. A transverse flux electrical machine (10) comprising a rotor including a rotor shaft (12) for rotation about an axis and at least one disc (14) extending from the rotor shaft (12) for rotation therewith, the rotor disc (14) having at least one pair of circumferential rotor rims (16) secured to the rotor disc (14), the rims (16) in each pair being secured at the same radial location on opposite sides of the rotor disc (14), each rotor rim (16) consisting of alternate magnets (20) and pole pieces (18) and being opposed by a stator assembly comprising stator cores (22) which are disposed adjacent and facing the rotor rim (16), armature windings (24) being disposed within the stator cores (22) for operably exciting said stator, characterised in that in operation the armature windings (24) for a pair of rotor rims (16) at a particular radial location on the disc (14) are excited by electrical currents which are in antiphase and the rotor magnets (20) or the rotor magnets (20) and the stator cores (22) in each pair are arranged so that the long path fluxes cancel.

2. An electrical machine as claimed in claim 1 characterised in that the rotor magnets (20) in each pair of rims (16) have reverse polarity to one another and the stator cores (22) are oppositely handed so that the long path fluxes cancel.

3. An electrical machine as claimed in claim 1 characterised in that the rotor magnets (20) in each pair of rims (16) are slanted in opposite directions to cancel the long path fluxes.

4. An electrical machine as claimed in any preceding claim characterised in that it has multiple discs (14).

5. An electrical machine as claimed in claim 4 characterised in that the phase orientation for a pair of rims(16) on one disc (14) is displaced relative to the phase orientation for pairs of rims (16) on the other discs (14) to reduce torque ripple.

6. An electrical machine as claimed in claim 5 having three discs (14) the phase orientation for the pair of rims (16) on each disc (14) being phase displaced by 120° relative to the phase orientation for the pairs of rims (16) on the other discs (14) to reduce torque ripple.

7. An electrical machine as claimed in any preceding claim characterised in that multiple pairs of rims (16) are provided on each disc (14) at different radial locations on the disc (14).

8. An electrical machine as claimed in claim 7 characterised in that the phase orientation for pairs of rims (16) on each disc (14) are displaced relative to the phase orientation for the other pairs of rims (16) on the same disc (14) to reduce torque ripple.

9. An electrical machine as claimed in claim 8 characterised in that two pairs of rims (16) are provided on each rotor disc (14) at different radial locations, the phase orientation of the radially outer pair of rims (16) being displaced by 90° relative to the phase orientation of the radially inner pair of rims (16) to reduce torque ripple.

## Patentansprüche

1. Elektrische Querflußmaschine (10) mit einem Rotor und einer Rotorwelle (12), die sich um eine Achse drehen, und mit wenigstens einer Scheibe (14), die sich von der Rotorwelle (12) erstreckt und sich mit dieser dreht, wobei die Rotorscheibe (14) wenigstens ein Paar ringsumlaufende Rotorreifen (16) aufweist, die an der Rotorscheibe (14) festgelegt sind, und die Reifen (16) in jedem Paar an der gleichen Radialstelle auf gegenüberliegenden Seiten der Rotorscheibe (14) befestigt sind, und wobei jeder Rotorreifen (16) abwechselnd aus Magneten (20) und Polstücken (18) besteht, denen gegenüber ein Statoraufbau mit Statorkernen (22) liegt, die benachbart angeordnet sind und auf den Rotorreifen (16) hin weisen, und wobei die Ankerwicklungen (24) in den Statorkernen (22) angeordnet sind, um betriebsmäßig den Stator zu erregen,
dadurch gekennzeichnet, daß im Betrieb die Ankerwicklungen (24) für ein Paar von Rotorreifen (16) an einer bestimmten radialen Stelle auf der Scheibe (14) durch elektrische Ströme erregt werden, die in Gegenphase befindlich sind, und daß die Rotormagnete (20) oder die Rotormagnete (20) und die Statorkerne (22) in jedem Paar so angeordnet sind, daß die Langpfadflüsse ausgelöscht werden.

2. Elektrische Maschine nach Anspruch 1,
dadurch gekennzeichnet, daß die Rotormagnete (20) in jedem Reifenpaar (16) umgekehrt zueinander polarisiert sind und die Statorkerne (22) im Gegensinn symmetrisch sind, so daß die Langpfadflüsse ausgelöscht werden.

3. Elektrische Maschine nach Anspruch 1,
dadurch gekennzeichnet, daß die Rotormagnete (20) in jedem Reifenpaar (16) in entgegengesetzten Richtungen abgeschrägt sind, um die Langpfadflüsse auszulöschen.

4. Elektrische Maschine nach einem der vorhergehenden Ansprüche,
dadurch gekennzeichnet, daß sie mehrere Scheiben (14) aufweist.

5. Elektrische Maschine nach Anspruch 4,
dadurch gekennzeichnet, daß die Phasenorientierung für ein Reifenpaar (16) auf einer Scheibe (14) relativ zu der Phasenorientierung eines Reifenpaares (16) auf den anderen Scheiben (14) versetzt ist, um die Drehmomentwelligkeit zu vermindern.

6. Elektrische Maschine nach Anspruch 5, welche drei Scheiben (14) aufweist, wobei die Phasenorientierung für das Reifenpaar (16) auf jeder Scheibe (14) um 120 ° phasenverschoben ist gegenüber der Phasenorientierung für das Reifenpaar (16) auf den anderen Scheiben (14), um die Drehmomentwelligkeit zu vermindern.

7. Elektrische Maschine nach einem der vorhergehenden Ansprüche,
dadurch gekennzeichnet, daß mehrere Reifenpaare (16) auf jeder Scheibe (14) an unterschiedlichen radialen Stellen der Scheibe (14) vorgesehen sind.

8. Elektrische Maschine nach Anspruch 7,
dadurch gekennzeichnet, daß die Phasenorientierung für die Reifenpaare (16) auf jeder Scheibe (14) relativ zur Phasenorientierung für die anderen Reifenpaare (16) auf der gleichen Scheibe (14) versetzt ist, um die Drehmomentwelligkeit zu vermindern.

9. Elektrische Maschine nach Anspruch 8,
dadurch gekennzeichnet, daß zwei Reifenpaare (16) auf jeder Rotorscheibe (14) an unterschiedlichen radialen Stellen angeordnet sind, wobei die Phasenorientierung des radial äußeren Reifenpaares (16) gegenüber der Phasenorientierung des radial inneren Reifenpaares (16) um 90 ° verschoben ist, um die Drehmomentwelligkeit zu vermindern.

## Revendications

1. Machine électrique à flux transversale (10) comprenant un rotor comprenant un arbre de rotor (12) pour tourner autour d'un axe et au moins un disque (14) s'étendant à partir de l'arbre de rotor (12) pour tourner avec lui, le disque de rotor (14) ayant au moins une paire de couronnes de rotor circonférentielles (16) fixée au disque de rotor (14), les couronnes (16) dans chaque paire étant fixée au même endroit radial sur des côtés opposés du disque de rotor (14), chaque couronne de rotor (16) étant constituée d'aimants alternés (20) et de pièces de pôle (18) et faisant face à un ensemble de stators comprenant des noyaux de stator (22) qui sont disposés de manière adjacente en faisant face aux couronnes de rotor (16), des enroulements rotoriques (24) étant disposés à l'intérieur des noyaux de stator (22) pour exciter de manière opérante ledit stator, caractérisé en ce qu'en fonctionnement, les enroulements rotoriques (24) pour une paire de couronnes de rotor (16) à un endroit radial particulier sur le disque (14) sont excités par des courants électriques qui sont en opposition de phase et les aimants de rotor (20), ou les aimants de rotor (20) et les noyaux de stator (22) dans chaque paire sont arrangés de telle sorte que les flux de chemin longs sont éliminés.

2. Machine électrique selon la revendication 1, caractérisé en ce que les aimants de rotor (20) dans chaque paire de couronnes (16) ont une polarité inverse les uns par rapport à l'autre, et les noyaux de stator (22) sont disposés de manière opposée de telle sorte que les flux de chemin longs sont éliminés.

3. Machine électrique selon la revendication 1, caractérisée en ce que les aimants de rotor (20) dans chaque paire de couronnes (16) sont inclinés avec des directions opposées pour éliminer les flux de chemin longs.

4. Machine électrique selon l'une quelconque des revendications précédentes, caractérisée en ce qu'il y a plusieurs disques (14).

5. Machine électrique selon la revendication 4, caractérisée en ce que l'orientation de phase pour une paire de couronnes (16) sur un disque (14) est déplacée par rapport à l'orientation de phase pour des paires de couronnes (16) sur l'autre disque (14) pour réduire l'ondulation de torsion.

6. Machine électrique selon la revendication 5, ayant trois disques (14), l'orientation de phase pour la paire de couronnes (16) sur chaque disque (14) étant déphasée de 120° par rapport à l'orientation de phase des paire de couronnes (16) sur les autres disques (14) pour réduire l'ondulation de torsion.

7. Machine électrique selon l'une quelconque des revendications précédentes, caractérisée en ce que plusieurs paires de couronnes (16) sont prévues sur chaque disque (14) en des positions radiales différentes sur le disque (14).

8. Machine électrique selon la revendication 7, caractérisée en ce que l'orientation de phase pour des paires de couronnes (16) sur chaque disque (14) est déplacée par rapport à l'orientation de phase des autres paires de couronnes (16) sur le même disque (14) pour réduire l'ondulation de torsion.

9. Machine électrique selon la revendication 8, caractérisée en ce que les deux paires de couronnes (16) sont prévues sur chaque disque de rotor (14) en des positions radiales différentes, l'orientation de phase de la paire de couronnes radialement externe (16) étant déplacée de 90° par rapport à l'orientation de phase de la paire de couronnes (16) radialement interne pour réduire l'ondulation de torsion.
